# EUROPEAN PATENT SPECIFICATION

(11) **EP 2 775 282 B1**
(45) Date of publication and mention of the grant of the patent: **20.03.2019**
(21) Application number: 14157053.1
(22) Date of filing: 27.02.2014
(51) Int. Cl.: G01M 1/04, F01D 25/28, G01M 1/06

(54) **Apparatus for measuring rotational imbalance of a turbocharger core assembly**
Vorrichtung zur Messung des Drehungleichgewichts einer Turboladerkernanordnung
Appareil pour la mesure du déséquilibre rotationnel d'un ensemble de noyau de turbocompresseur

(30) Priority: 07.03.2013 GB 201304100
(43) Date of publication of application: 10.09.2014
(73) Proprietor: Turbo Technics Limited, Brackmills, Northampton NN4 7PL (GB)
(72) Inventor: Kershaw, Geoffrey, Northampton, Northamptonshire NN4 0NH (GB)
(74) Representative: HGF Limited

(56) References cited:
- EP-A2- 1 901 051
- WO-A1-2009/068473

## Description

This invention concerns a test rig for measuring out of balance conditions of a turbocharger core assembly, or to put it another way, apparatus for balancing a turbocharger core assembly (also referred to more generally as a centre housing rotating assembly (CHRA) according to the subject-matter of claim 1.

The core assembly of a turbocharger comprises three main parts, namely a turbine wheel which in service is driven by the exhaust gas from a pump, usually an internal combustion engine, a compressor wheel drivingly connected to the turbine wheel whose function is to force more air into the pump's air intake or air supply, and a central hub rotating assembly which contains bearings and a shaft directly connecting the turbine wheel and the compressor wheel. This core assembly can rotate in service at speeds typically in the region of 100,000 to 250,000 revolutions per minute and so dynamic balancing of the assembly about its rotational axis is critical. Individual imbalance of the turbine wheel, the compressor wheel and the connecting shaft can cause an accumulation of balance error which at high operating speed can result in a noisy turbocharger and, in a severe case can cause premature bearing failure.

The imbalance can be corrected by running the core assembly in a slave housing at high speed on a flexible suspension of a test rig, measuring the vibration response and consequently removing metal from the rotational assembly to achieve an acceptable balance.

Such a test rig provides a slave housing adapter with quick release clamps for attachment and removal of the turbocharger core assembly, and the adapter is in turn attached to a flexibly mounted air inlet assembly which directs air into the housing to rotate the turbine and shaft. An accelerometer is attached to the adapter to measure vibration of the complete assembly.

Various methods and devices have been used for mounting and driving the turbocharger core assembly in a high-speed core balancing rig.

Such devices include, for example, a rubber or other resilient mounting block which isolates the assembly from a machine frame.

Another technique is to mount the assembly in a rig comprising a pair of spaced leaf springs mounted on a rigid base so that the whole assembly is capable of oscillatory vibration in a single plane transversely across the springs. Where the air inlet is disposed at one side of the machine, with the nozzle tube assembly passing between the leaf springs to transmit the air to the core assembly mounted at an opposite side, the nozzle tube assembly can introduce undesirable resonance resulting in an inaccurate measurement of the true imbalance vibration of the core assembly.

In the applicant's earlier specification EP-A-1901051 (also US 7,832,270) a configuration of test rig is disclosed wherein the support housing (namely, the aforementioned slave housing), which is annular, is itself mounted between spaced resilient means, such as a pair of leaf springs, attached to the base frame such as to afford a degree of movement to the rigid annular housing in a plane transverse to the rotational axis of the core assembly. Thus, in this arrangement the common axis of the turbocharger core assembly and the support housing extends through the space between the resilient supporting means compared to the conventional arrangement of mounting the support housing from one side.

Also, the rigid annular support housing typically includes a volute through which air is fed to drive the core assembly and the volute is also co-axial with the turbocharger core assembly and the support housing.

In the applicant's earlier arrangement, as described in EP-A-1901051 (also US 7,832,270) the rigid annular support housing consisted of two co-axial parts, the first part being a universal part attached by the resilient means to the base frame and having a driving air inlet passage communicating with an internal chamber, and the second part being a bespoke adapter for mounting a particular style/design of turbocharger core assembly to be tested. The adapter was removably attached to the first part, and the adapter contained the structure of the volute, although the volute extended into the annular chamber of the first part to receive driving air from the air inlet when the two parts were attached together.

In the aforesaid arrangement, the volute could be configured to deliver driving air preferentially to a reduced diameter portion of the turbine of the core assembly being tested.

Also in the aforesaid arrangement, the device to measure the transverse vibration of the core assembly was preferably an accelerometer mounted on the first part of the support means.

Also in the aforesaid arrangement, the base frame itself consisted of an annular air exhaust housing co-axially and sealingly engaged with the annular support housing while allowing the required degree of relative movement thereof.

It is also known to provide apparatus for measuring rotational imbalance of a turbocharger core assembly (that is to say, a balancing machine) which has similar design to that just explained, but in which the adapter part of the support housing does not include a volute but instead includes a plurality of tangential nozzles arranged around the circumference of the adapter part, which is annular. It is believed that use of multiple nozzles has a tendency to cause blade passing disturbance and noise during the balancing operation and also to be relatively inefficient, resulting in greater use of compressed air compared to a volute arrangement. Another relevant prior art document is represented by the patent WO 2009/068473.

Turbochargers are widely used in engines, particularly diesel engines, including diesel engines used in small passenger vehicles and light commercial vehicles. Checking and improving the balance of a turbocharger core assembly is an activity required during manufacture, servicing and repair of such engines. There are currently well over two hundred different designs of turbocharger core assemblies, as for different vehicle manufacturers and different styles of vehicle, for each of which a different adapter is required for secure mounting of the core assembly onto a preferred form of test rig. There are, for example, different lengths and diameters of connecting shaft, different positioning of mounting flanges and different diameters and widths of such flanges, and different shapes of the periphery of such flanges, and different positioning of bearings, which account for the requirement for different adapters for the mounting of these different assemblies.

An object of the present invention is to minimise the complexity of adapters required for securely mounting a wide range of different styles of turbocharger core assemblies, so that the overall apparatus and balancing procedure becomes more cost-effective, and is therefore affordable by small repair workshops.

With this object in view, the present invention provides a centre housing rotating assembly (CHRA) balancing rig, namely apparatus for measuring rotational imbalance of a turbocharger core assembly, as specified in appended claim 1.

Other preferred features are specified in the dependent claims and further features and advantages are explained below by reference to a practical illustrated embodiment.

### BRIEF DESCRIPTION OF THE DRAWINGS

In this respect, the invention will now be described further, by way of example, with reference to the accompanying drawings, in which:
Fig.1 schematically illustrates one conventional form of apparatus for measuring the rotational imbalance of the turbocharger core assembly;
Fig. 2 shows a further conventional form of apparatus for this purpose;
Fig. 3 is a schematic plan view of a further known form of apparatus for this purpose;
Fig. 4 is a schematic perspective view from the front and one side, also in longitudinal cross-section, of the main mounting portion (i.e. the support housing) of one practical embodiment of apparatus made in accordance with the invention with a turbocharger core assembly mounted thereto;
Fig. 5 is a reduced scale longitudinal cross-section of the same main mounting portion of the same embodiment of the invention as in figure 4, also with the turbocharger core assembly mounted thereto;
Fig. 6 corresponds to Fig. 5, without the turbocharger core assembly;
Fig.7 is a perspective view of the main mounting portion of the same embodiment of the invention as in figure 4 with a turbocharger core assembly mounted thereto; and
Fig. 8 corresponds to Fig. 7, but without the turbocharger core assembly mounted thereto.

### DETAILED DESCIPTION

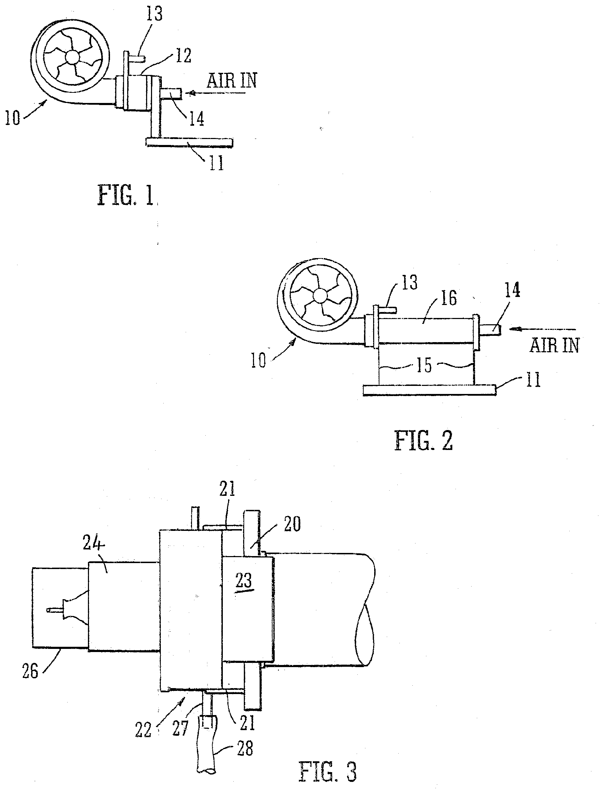

Referring to Fig. 1, in one conventional arrangement, a combined turbine housing and volute 10 is mounted on a rigid and fixed base frame 11 by way of a rubber suspension block 12 situated to the side of the axis of the housing and volute 10. An accelerometer 13 is provided to measure oscillatory vibration from the turbine housing to which air is supplied via inlet 14 to drive the turbine.

Referring now to Fig. 2, in an alternative conventional arrangement, the turbine housing 10 is again mounted from one side relative to the housing axis on one of a pair of spaced leaf springs 15 which extends from the fixed base 11. Thus, the turbine housing is afforded a degree of oscillatory movement transversely across the leaf springs. However, in this case an air supply tube assembly 16 connects the air inlet 14, across the leaf springs, to the turbine housing 10, and the assembly 16 can vibrate separately which may introduce undesirable resonances which can result in an inaccurate reading of the vibration of the turbine housing.

Referring now to Fig. 3, in a further known proposal, a base frame 20 is mounted rigidly to the floor of a test room, with an annular base frame portion 23 secured thereon. A pair of leaf springs 21 extends forwardly of the frame portion 23 to provide a mounting for an annular support housing 22 to which is attached a turbocharger core assembly housing 24. A shroud 26 is provided to cover the otherwise exposed compressor wheel of the turbocharger core assembly. This is for safety and also to avoid excess windage.

An air inlet 27 is fed via a flexible pipe 28 to deliver air to the support housing 22 wherein a volute (see Figs. 1 and 2) feeds the air peripherally to the turbine of the turbocharger core assembly to drive it in rotation.

It will be noted that the rotational axis of the turbocharger core assembly 24 and of the volute within the support housing 22 extends through the space between the supporting leaf springs 21 and that, accordingly, in this particular arrangement the turbocharger core assembly and the volute are co-axial with the support housing 22.

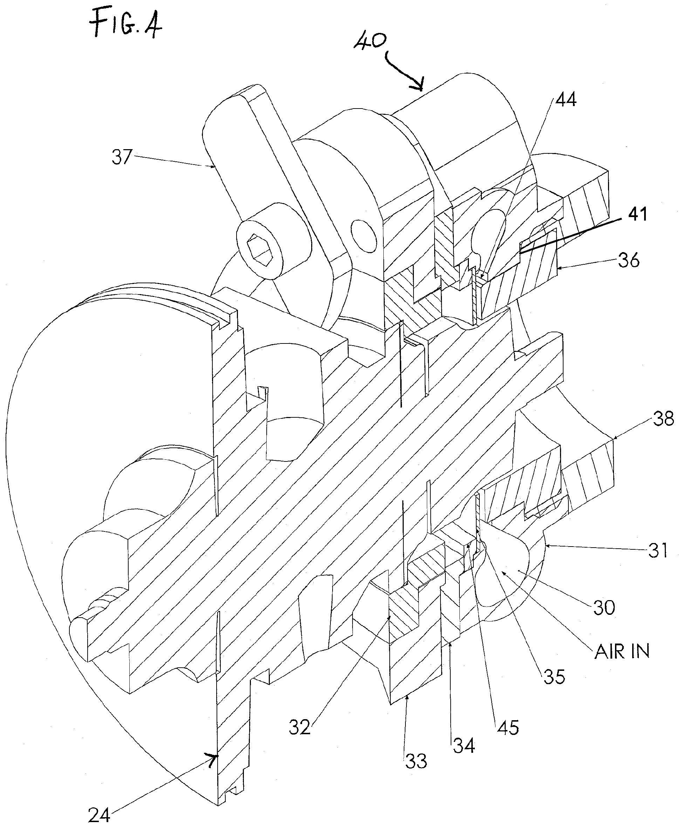

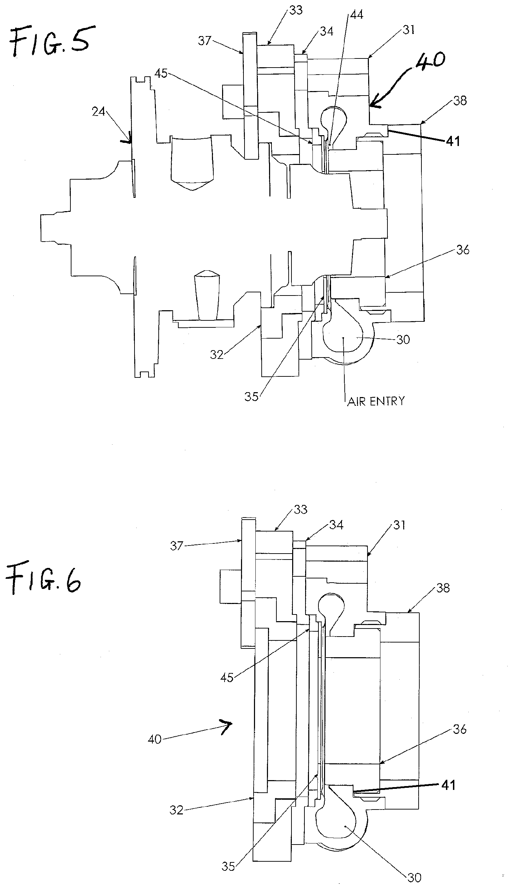

Referring now to Figs. 4 to 7, details of a relevant mounting portion, namely a support housing 40, of apparatus in accordance with the invention is shown, with the turbocharger core assembly 24 (also referred to more generally as a centre housing rotating assembly (CHRA)) mounted thereto in Figs 4, 5 and 7. The remainder of the apparatus, namely the arrangement for mounting this to a base frame can be as previously known, for example as shown schematically in Fig. 1 or Fig. 2, or as disclosed in the applicant's previously referenced earlier patent specifications and shown schematically in Fig. 3 and therefore does not require further illustration or description.

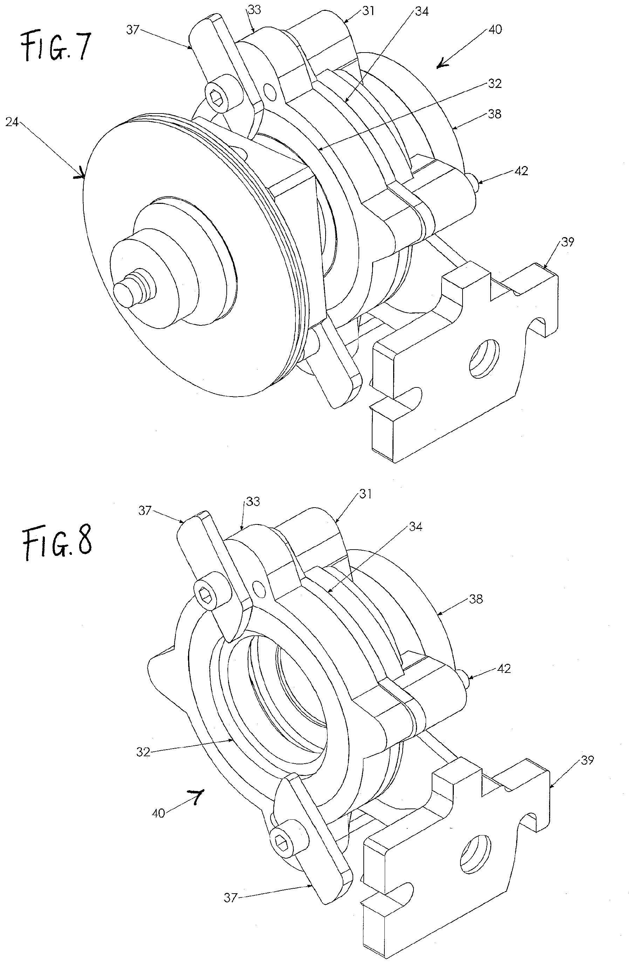

In this specific embodiment, the support housing 40 comprises eight separate components, 31 to 36, 45 and 38, fitted together. Towards the rear, a first axial part 31, which is configured internally to provide a volute 30 is mounted to the base frame. At the front, a second part of the support housing 40 is in the form of a mounting ring 32 which is, in effect, a bespoke adapter having an internal configuration, in this illustrated version an annular stepped configuration, adapted to closely match and fit to the exterior of the turbocharger core assembly 24. This ring (adapter) 32 has an external periphery configured to engage snugly into a mounting flange 33, which is secured by pins 42 (see figures 7 and 8) to the front of the first part 31. The flange 33 is a separate mounting ring and in the illustrated embodiment it has an internal step or shoulder which the exterior of the adapter 32 matches in configuration so as to fit therein. A spacer 34, namely a further annular component, is interposed between the flange 33 and the first part 31 in this embodiment. Quick release clamps 37 enable ready attachment and removal of the turbocharger core assembly 24 to the front of the mounting ring 32.

A further part of the support housing 40 is a volute plate 35 which, as shown in figure 4, is mounted inside the first part 31 to provide a front end plate to delimit the volute 30. This volute plate 35 is clamped in place against an internal shoulder of the first part 31 by a ring 45 located between the volute plate 35 and the spacer 34. Behind the volute plate 35 an outer sleeve 36 engages behind a shoulder 41 of the first part 31 and cooperates with the volute plate 35 to define a slot-like air inlet 44 through which air is introduced from the volute 30 to a narrow exducer portion of the turbine wheel of the turbocharger core assembly 24. Finally, a retainer ring 38 is provided, attached to a rebate in the rear of the first axial part, to hold the outer sleeve 36 in place.

As already mentioned, the adapter 32 is a bespoke part closely matched to the configuration of the relevant turbocharger which is to be checked in any particular operation of the exemplary machine in accordance with the invention. It is, of course, interchangeable with other mounting rings which are similarly bespoke (specifically designed) for use in attaching other styles and designs of turbocharger core assembly to the relevant machine.

The first part 31 may be attached to the base frame portion by way of any known type of resilient mounting, for example as shown in figures 1, 2 or 3. Figs. 7 and 8 illustrates a particular mounting arrangement whereby the first part 31 is configured so as to incorporate a mounting bracket 39 whereby it is mounted from one side by way of a resilient rubber block (not shown) in similar manner to the prior art arrangement of Fig.1.

The first part 31 and the flange 33 are universal components, used in respect of mounting all types of turbocharger core assembly. The clamping ring 45 and the retainer ring 38 are also universal components applicable to the mounting of all types of turbocharger core assembly, retaining different sizes of volute plate 35 and outer sleeve 36, respectively.

As already noted, the mounting ring 32 is bespoke and there will be a different one matched to each type (shape of mounting portion) of turbocharger core assembly.

In respect of each of the other three components, namely the spacer 34, the volute end plate 35, and the outer sleeve 36, a small range of differently configured parts is all that is required so that an appropriate one can be chosen to adapt the overall assembly for secure mounting of the wide range of different turbocharger core assemblies. As regards the spacer 34, this will be provided in a small range of different thicknesses to accommodate different lengths of turbocharger core assembly, specifically different lengths of the connecting shaft of such assembly, in the support housing assembly 40.

In this way, a relatively small number of relatively easily fabricated components is sufficient to adapt the support housing assembly for mounting the many different turbocharger core assembly sizes and mounting details. These components are designed to be easily assembled and disassembled. This enables the balancing operation for the wide range of different turbocharger core assemblies to be carried out more cost effectively than hitherto. The changeover from mounting one such assembly to another such assembly can be carried out quickly and efficiently, by ready choice from the various small range of component styles for components 34, 35 and 36 and the bespoke mounting ring 32. For example, there may be a range of five or six for each of the spacer 34, the volute plate 35, and the outlet sleeve 36. Changeover from the mounting of one turbocharger core assembly to another can be carried out in a very short time with the arrangement in accordance with the invention.

In operation of the illustrated version, air is introduced from the volute 30 radially, but around the entire circumference, via the narrow slot 44 to the interior of the support housing assembly 40 at the reduced diameter exducer portion of the turbine assembly. In other embodiments (not shown), the design of the respective components 31 to 38 and 46 could be modified so that air could be introduced adjacent the larger diameter portion of the turbine to which the driving air would normally be supplied in a turbocharger in service where hot engine exhaust gases are used to drive the turbine. Usually, it is more efficient in a test rig to introduce air at ambient temperature and to supply the air through the narrow slot 44 to the reduced diameter part of the turbine to produce the rotational speeds necessary to test the balance of the core assembly. Air is supplied to the volute 30 at a velocity sufficient to drive the turbine up to the required rotational speed.

An accelerometer (not shown) mounted to the exterior of the support assembly 40 measures any oscillatory vibration and thus provides information as to any imbalance of the rotary core assembly. The accelerometer is typically mounted to the exterior of the flange 33, particularly as this is a universal part, Normal rebalancing techniques can then be applied and the test can be repeated.

Apparatus for measuring the rotational imbalance of the turbocharger core assembly made in accordance with the invention provides a quick change over between different turbocharger core models and accepts a wide variety of sizes of turbocharger or assembly.

## Claims

1. Apparatus for measuring rotational imbalance of a turbocharger core assembly (24), comprising a base frame (11), a rigid annular support housing (40) for mounting a rotational core assembly (24) thereon, air supply means for rotationally driving a turbine of the core assembly (24), and a device (13) to measure transverse oscillatory vibration of the core assembly (24) during rotation, wherein the support housing (40) is mounted to the base frame (11) by resilient means (12, 15) such as to afford a degree of movement of the support housing (40) in a plane transverse to the rotational axis of the core assembly (24), the support housing (40) comprising a first axial part (31), a second axial part (32) connected to the first axial part (31) by a universal flange (33), quick release clamps (37) for attachment and removal of the core assembly (24) to the front of the second axial part (32) and at least one further part (35, 36), wherein the first axial part (31) has a driving air inlet and is internally configured to include a volute (30) through which air is fed from the air supply means to drive the core assembly (24) and the at least one further part (35, 36) is mounted at least in part within the first axial part (31) to form an air inlet passage (44) from the volute (30) to an interior chamber of the support housing (40), wherein the second axial part (32) is an adapter enabling attachment of the turbocharger core assembly (24) to the support housing (40), the second axial part (32) being a mounting ring with an internal configuration adapted to closely match, fit to and retain the exterior of the turbocharger core assembly (24) and an external periphery configured to engage snugly into the universal flange (33), the universal flange (33) being a mounting ring having an internal step or shoulder which the exterior of the second axial part (32) matches in configuration so as to fit therein.

2. Apparatus according to claim 1 wherein the support housing (40) comprises at least two further parts (35, 36) mounted within the first axial part (31) to form an air inlet passage (44) from the volute to an interior chamber of the support housing (41).

3. Apparatus according to claim 1 or claim 2 wherein the further part is or the further parts include a part providing an end plate (35) of the volute.

4. Apparatus according to claim 1, 2 or 3 wherein the further part is or the further parts include a sleeve (36) adapted to surround an inner end portion of the turbocharger core assembly.

5. Apparatus according to any preceding claim wherein an annular spacer (34) is mounted between the universal flange (33) and the first axial part (31) of the support housing (40).

6. Apparatus according to any preceding claim, wherein the resilient means comprises a mounting block (12) of resilient material.

7. Apparatus according to any of claims 1 to 5, wherein the resilient means comprises a pair of leaf springs (15) attached respectively at two opposed locations to the base frame (11) such that they are located one on each side of the rotational axis of the core assembly (24).

8. Apparatus according to any preceding claim, wherein the volute (30) and the air inlet passage (44) from the volute (30) to an interior chamber of the support housing (41) are configured to deliver driving air preferentially to a reduced diameter portion of the turbine of a core assembly (24).

9. Apparatus according to any preceding claim, including clamping means (37) on the support housing (41) for ready attachment and removal of a turbocharger core assembly (24).

## Patentansprüche

1. Vorrichtung zur Messung eines Drehungleichgewichts einer Turboladerkernanordnung (24), umfassend einen Basisrahmen (11), ein starres ringförmiges Stützgehäuse (40), zur Montage einer sich drehenden Kernanordnung (24) darauf, Luftzufuhrmittel zum drehenden Antreiben einer Turbine der Kernanordnung (24) und eine Einrichtung (13) zum Messen von Querschwingungsvibrationen der Kernanordnung (24) während der Drehung, wobei das Stützgehäuse (40) mithilfe elastischer Mittel (12, 15) so an den Basisrahmen (11) montiert ist, dass ein Grad an Bewegung des Stützgehäuses (40) in einer quer zur Drehachse der Kernanordnung (24) verlaufenden Ebene ermöglicht wird, wobei das Stützgehäuse (40) einen ersten axialen Teil (31) und einen zweiten axialen Teil (32) umfasst, der durch einen Universalflansch (33), Schnelllöseklemmen (37) zum Anbringen und Entfernen der Kernanordnung (24) an die Vorderseite des zweiten axialen Teils (32) und mindestens einen weiteren Teil (35, 36) an den/vom ersten axialen Teil (31) verbunden ist, wobei der erste axiale Teil (31) einen Antriebslufteinlass aufweist und intern konfiguriert ist, um eine Spirale (30) zu enthalten, durch die Luft vom Luftzufuhrmittel zugeführt wird, um die Kernanordnung (24) anzutreiben, und der mindestens eine weitere Teil (35, 36) mindestens teilweise im ersten axialen Teil (31) montiert ist, um einen Lufteinlassdurchgang (44) von der Spirale (30) zu einer Innenkammer des Stützgehäuses (40) zu formen, wobei der zweite axiale Teil (32) ein Adapter ist, der das Anbringen der Turboladerkernanordnung (24) an das Stützgehäuse (40) ermöglicht, wobei der zweite axiale Teil (32) ein Montagering mit einer inneren Konfiguration, die für ein(e) enge(s) Übereinstimmung, Passung und Halten des Äußeren der Turboladerkernanordnung (24) angepasst ist, und mit einer äußeren Peripherie, um den Universalflansch (33) bündig in Eingriff zu nehmen, ist, wobei der Universalflansch (33) ein Bergring mit einer inneren Abstufung oder Schulter ist, mit der das Äußere des zweiten axialen Teils (32) der Konfiguration nach übereinstimmt, um hineinzupassen.

2. Vorrichtung nach Anspruch 1, wobei das Stützgehäuse (40) mindestens zwei weitere Teile (35, 36) umfasst, die im ersten axialen Teil (31) montiert sind, um einen Lufteinlassdurchgang (44) von der Spirale zu einer Innenkammer des Stützgehäuses (41) zu formen.

3. Vorrichtung nach Anspruch 1 oder Anspruch 2, wobei der weitere Teil ein Teil ist oder die weiteren Teile einen Teil enthalten, der eine Endplatte (35) der Spirale bereitstellt.

4. Vorrichtung nach Anspruch 1, 2 oder 3, wobei der weitere Teil eine Hülle (36) ist oder die weiteren Teile eine Hülle enthalten, die zum Umgeben eines inneren Endteils der Turboladerkernanordnung angepasst ist.

5. Vorrichtung nach einem der vorstehenden Ansprüche, wobei ein ringförmiges Abstandelement (34) zwischen dem Universalflansch (33) und dem ersten axialen Teil (31) des Stützgehäuses (40) montiert ist.

6. Vorrichtung nach einem der vorstehenden Ansprüche, wobei das elastische Mittel einen Montageblock (12) aus elastischem Material umfasst.

7. Vorrichtung nach einem der Ansprüche 1 bis 5, wobei das elastische Mittel ein Paar Blattfedern (15) umfasst, die jeweils an zwei gegenüberliegenden Stellen am Basisrahmen (11) so angebracht sind, dass jeweils eine sich auf jeder Seite der Drehachse der Kernanordnung (24) befindet.

8. Vorrichtung nach einem der vorstehenden Ansprüche, wobei die Spirale (30) und der Lufteinlassdurchgang (44) von der Spirale (30) zu einer Innenkammer des Stützgehäuses (41) konfiguriert sind, um Antriebsluft vorzugsweise zu einem Teil der Turbine einer Kernanordnung (24) mit verringertem Durchmesser zu liefern.

9. Vorrichtung nach einem der vorstehenden Ansprüche, enthaltend Klemmmittel (37) am Stützgehäuse (41) für die einfache Anbringung und Entfernung einer Turboladerkernanordnung (24).

## Revendications

1. Appareil pour la mesure d'un déséquilibre de rotation d'un ensemble de noyau de turbocompresseur (24), comprenant un châssis de base (11), un boîtier de support annulaire rigide (40) pour le montage sur celui-ci d'un ensemble de noyau rotatif (24), une fourniture d'air pour l'entraînement rotatif d'une turbine de l'ensemble de noyau (24), et un dispositif (13) pour mesurer des vibrations oscillatoires transversales de l'ensemble de noyau (24) au cours de la rotation, le boîtier de support (40) étant monté sur le châssis de base (11) à l'aide de dispositifs élastiques (12, 15) de façon à permettre au boîtier de support (40) un degré de mouvement dans un plan transversal à l'axe de rotation de l'ensemble de noyau (24), le boîtier de support (40) comprenant un premier composant axial (31), un deuxième composant axial (32) connecté au premier composant axial (31) par une bride universelle (33), des dispositifs de serrage libération rapide (37) pour la fixation, et le démontage, de l'ensemble de noyau (24) sur la partie antérieure du deuxième composant axial (32), et au moins un autre composant (35, 36), le premier composant axial (31) possédant une entrée d'air d'entraînement, et étant configuré à l'intérieur pour comprendre une volute (30) par laquelle de l'air est introduit par le dispositif de fourniture d'air pour l'entraînement de l'ensemble de noyau (24), et l'au moins un autre composant (35, 36) étant monté au moins en partie dans le premier composant axial (31) de façon à former un passage d'entrée d'air (44) de la volute (30) à une chambre intérieure du boîtier de support (40), le deuxième composant axial (32) étant un adaptateur permettant la fixation de l'ensemble de noyau de turbocompresseur (24) le boîtier de support (40), le deuxième composant axial (32) étant une bague de montage possédant une configuration interne adaptée pour s'adapter, tenir et fixer l'extérieur de l'ensemble de noyau de turbocompresseur (24) et un pourtour extérieur configuré pour s'engager étroitement dans la bride universelle (33), la bride universelle (33) étant une bague de montage possédant un pas ou épaulement interne auquel correspond la configuration de l'extérieur du deuxième composant axial (32) afin qu'il s'adapte dans celui-ci.

2. Appareil selon la revendication 1, le boîtier de support (40) comprenant au moins deux autres composants (35, 36) montés dans le premier composant axial (31) de façon à former un passage d'entrée d'air (44) de la volute à une chambre intérieure du boîtier de support (41).

3. Appareil selon la revendication 1 ou la revendication 2, l'autre composant étant, ou les autres composants comprenant, un composant formant une plaque d'extrémité (35) de la volute.

4. Appareil selon la revendication 1, 2 ou 3, l'autre composant étant, ou les autres composants comprenant, une gaine (36) adaptée pour entourer une partie d'extrémité intérieure du noyau de turbocompresseur.

5. Appareil selon une quelconque des revendications précédentes, un espace annulaire (34) étant monté entre la bride universelle (33) et le premier composant axial (31) du boîtier de support (40).

6. Appareil selon une quelconque des revendications précédentes, le dispositif élastique comprenant un bloc de montage (12) en matière élastique.

7. Appareil selon une quelconque des revendications 1 à 5, le dispositif élastique comprenant une paire de ressorts à lames (15) fixés respectivement dans deux emplacements opposés sur le châssis de base (11) de sorte qu'ils se placent un de chaque côté de l'axe de rotation de l'ensemble de noyau (24).

8. Appareil selon une quelconque des revendications précédentes, la volute (30) et le passage d'entrée d'air (44) de la volute (30) à une chambre intérieure du boîtier de support (41) étant configurés pour refouler de l'air d'entraînement de préférence à une partie à diamètre réduit de la turbine d'un ensemble de noyau (24).

9. Appareil selon une quelconque des revendications précédentes, comprenant un dispositif de serrage (37) sur le boîtier de support (41) pour faciliter la fixation, et le démontage, d'un ensemble de noyau de turbocompresseur (24).
